# EUROPÄISCHE PATENTSCHRIFT

(11) **EP 1 186 928 B1**
(45) Veröffentlichungstag und Bekanntmachung des Hinweises auf die Patenterteilung: **18.01.2006**
(21) Anmeldenummer: 01117770.6
(22) Anmeldetag: 01.08.2001
(51) Int. Cl.: G02B 7/28, G01B 11/25

(54) **Parallelverarbeitender optischer Entfernungsmesser**
Optical distance measurement device with parallel processing
Appareil optique de mesure de distances à traitement parallèle

(30) Priorität: 07.09.2000 DE 10044082; 09.03.2001 DE 10111245
(43) Veröffentlichungstag der Anmeldung: 13.03.2002
(73) Patentinhaber: Heidelberger Druckmaschinen Aktiengesellschaft, 69115 Heidelberg (DE)
(72) Erfinder: Beier, Bernard, Dr., 68526 Ladenburg (DE); Vosseler, Bernd, 69120 Heidelberg (DE)
(74) Vertreter: Fey, Hans-Jürgen

(56) Entgegenhaltungen:
- DE-C- 4 013 283
- US-A- 4 705 401
- US-A- 5 675 407
- US-A- 6 046 812
- T. PFEIFER, P. SOWA: "Untersuchung eines hochgenauen laseroptischen 3D-Konturmessverfahren für die Vermessung von Freiformflächen" 3D-OBJEKTVERMESSUNG AUF KLEINERE ENTFERNUNGEN, Mai 1995 (1995-05), Seiten 1-14, XP002271999 VDI Technologiezentrum Physikalische Technologien, Düsseldorf

## Beschreibung

Die Erfindung betrifft eine Einrichtung zur Bestimmung der Abweichung der Lage von *n* Punkten, wobei *n* eine natürliche Zahl ist, von ihren n disjunkten Referenzlagen mit einer Quelle elektromagnetischer Strahlung, einer Abbildungsoptik und einem fotosensitiven Detektor, wobei die Lageinformation in einen Intensitätsinformation umgewandelt wird.

Zur Bebilderung von ebenen oder gekrümmten Druckformen, sei es in einem Druckformbelichter oder in einem Druckwerk oder in einer Druckmaschine, werden häufig Arrays von Lichtquellen, typischerweise Laser, eingesetzt. Mit dem Array, welche typischerweise senkrecht zur durch die optische Achse der Abbildungsoptik definierten Geraden liegt, wird eine Anzahl *n* einzelner Lichtstrahlen erzeugt, deren von Lichtquellen, beispielsweise Laserdioden, vermittels einer Objektivoptik Bildpunkte auf einer Fläche von mehreren Millimetern mal Mikrometer, typischerweise im Wesentlichen auf einer Ebene oder sogar Geraden liegend, auf der Druckform verteilt sind. Unter einem Punkt oder Bildpunkt wird dabei sowohl ein mathematischer Punkt als auch ein mehrdimensionale, begrenzte Fläche verstanden. Die Bildpunkte eines einzelnen Strahls haben gewöhnlich einen Durchmesser von mehreren Mikrometern und weisen einen Abstand von mehreren 100 Mikrometern zueinander auf. Durch Verschmutzung der Unterlage, sei es eine ebene oder gekrümmte Fläche, durch Puderstaub, andere Staubpartikel oder dergleichen, liegt die Druckform häufig nicht flach an, sondern es können sich lokale Aufwölbungen ausbilden, welche einen Durchmesser von mehreren Millimetern aufweisen. Sowohl für alle *n* Strahlen identische als auch einzelne Abbildungsoptiken des Arrays sind in der Regel derart ausgebildet, dass die Referenzlagen der Bildpunkte, mit anderen Worten ihre gewünschte Position mit einem Referenzabstand zur Objektivoptik, im Wesentlichen in einer Ebene liegen. Durch die Aufwölbungen ist es jedoch erforderlich, dass Bildpunkte einzelner Strahlen in einer anderen Ebene als die durch die Referenzlage definierten Ebene, welche typischerweise eine senkrechte zur durch die optische Achse der Abbildungsoptik definierten Geraden liegt, liegen. Um ein gewünschtes Bebilderungsergebnis auch an diesen Stellen im Bildfeld zu erzielen, ist es je nach verwendetem Verfahren erforderlich, entweder die Lichtleistung für die betroffenen Lichtquellen im Array zu verändern oder aber, insbesondere wenn es sich bei den Bildpunkten in der Referenzlage um die Strahltaille der Lichtquelle handelt, den Fokus der Abbildungsoptik zu verschieben, sei es durch Veränderung der Gegenstandsweite, der Bildweite oder der Verschiebung der Hauptebenen der Abbildungsoptik. In beiden Fällen ist es erforderlich, die Lage des aktuellen Bildpunktes zu seiner Referenzlage zu bestimmen, da diese Größe als Eingangswert zur Berechnung der erforderlichen Leistungsänderung oder der erforderlichen Veränderung der Abbildungsoptik erforderlich ist. Typischerweise dient das Ergebnis einer derartigen Entfernungsmessung oder Abstandsmessung zur Generierung eines Regelsignals. Ein Regelsignal kann beispielsweise aus der Weiterverarbeitung eines Signals eines fotosensitiven Detektors, also einer Lichtintensitätsmessung, erzeugt werden. Optische Entfernungsmesser werden insbesondere in Autofokuseinrichtungen verwendet.

In der US 4,546,460 wird eine Autofokusvorrichtung für ein optisches System mit einem Laser als Lichtquelle, einer Licht-reflektierenden Schicht und einem Fotodetektor, der wenigstens zwei fotosensitive Regionen aufweist, offenbart. Der Laserstrahl wird durch eine Objektlinse konvergiert und auf die Licht-reflektierende Schicht abgebildet. Das von der Schicht reflektierte Laserlicht wird durch die Objektivlinse und andere optische Komponenten auf die Oberfläche des Fotodetektors projiziert. Bei Verschiebung der Objektivlinse entlang der optischen Achse wird der Laserstrahl abgelenkt und das projizierte Muster auf der Oberfläche des Fotodetektors bewegt sich in eine bestimmte Richtung. Wenn die Objektivlinse in kürzerer Entfernung als eine vorbestimmte Entfernung zu der Licht-reflektierten Schicht liegt, befindet sich das Muster auf der ersten fotosensitiven Region. Befindet sich die Objektivlinse in einer größeren Entfernung als eine zweite vorbestimmte Entfernung, so wird das Muster ebenfalls auf der ersten fotosensitiven Region gebildet. Befindet sich die Objektivlinse in einer Distanz größer als die erste vorbestimmte und in einer Distanz kürzer als die zweite vorbestimmte von der Licht-reflektierenden Schicht, so wird das Muster auf der zweiten fotosensitiven Region des Fotodetektors gebildet. Aus der Bestimmung der Lage des Musters kann auf die Entfernung der Licht-reflektierenden Schicht zum optischen System geschlossen werden.

Des Weiteren ist es möglich, durch die Verschiebung der Objektivlinse den Fokus der Abbildungsoptik zu versetzen.

Nachteilig bei einer derartigen Anordnung ist, dass nur die Lage eines einzelnen Punktes zu einer Referenzlage bestimmt und ein einziger Fokus verschoben werden kann.

Beispielsweise in der US 5,302,997 wird eine Anordnung von fotometrischen und entfernungsmessenden Elementen in einem Array beschrieben, welches für eine automatische Fokuskontrolle und eine automatische Belichtungsmessung für ein zugehöriges optisches System zum Einsatz kommt. Die Anordnung weist ein zweidimensionales fotosensitives Element im Zentrum und auf jeder Seite davon eine linear angeordnete Anzahl fotosensitiver Elemente in einem Bildfeld auf. Vermittels eines Linsensystems wird ein Bild auf die Anordnung projiziert. Die linear angeordneten fotosensitiven Elemente erhalten dabei Licht eines kleinen Anteils des Bildfeldes und dienen zur Intensitätsmessung des eintreffenden Lichtes, während das zweidimensionale fotosensitive Element aus einer Anzahl einzelner Bereiche besteht und den zur Generierung eines Signals zur automatischen Fokuseinstellung.

Nachteilig bei dieser Anordnung ist ebenfalls, dass nur die Lage eines einzelnen Punktes zur Fokuskontrolle herangezogen wird. Obschon ein Array von fotosensitiven Elementen zur Intensitätsmessung zur Verfügung gestellt wird, werden die entsprechenden Signale nur zur automatischen Belichtungsmessung eingesetzt.

Zur Bestimmung der Abweichung der Lage von *n* Bildpunkten von ihren Referenzlagen für die *n* Lichtquellen eines Arrays, insbesondere von Lasern, sind die beschriebenen Vorrichtungen nicht geeignet, da keine Ortsauflösung für die *n* Bildpunkte möglich ist und nur ein Signal für das gesamte Bildfeld erzeugt wird. Die sukzessive Messung von *n* Abweichungen oder Distanzen impliziert eine n-fache Messzeit und ist für den gewünschten Zweck des Einsatzes insbesondere in einer Einrichtung zur Bebilderung von Druckformen nicht akzeptabel.

In der US 6,046,812 wird eine Laserapparatur zur Messung eines Konturprofils offenbart. Ein linienförmiger Lichtteppich einer Laserlichtquelle wird mittels einer Abbildungsoptik auf eine zu vermessende Oberfläche projiziert und in Triangulationsmethode detektiert, wobei eine anisotrope Vergrößerungsoptik verwendet wird, um die Auflösung zu erhöhen. Eine CCD-Kamera als fotosensitiver Detektor mit einer diskreten Anzahl von Bildpunkten erzeugt zeitlich simultan *n* Signale, wodurch die Lageinformation der Kontur in Intensitätsinformation gewandelt wird, wobei jedes der *n* Signale eindeutig einem der *n* diskreten Punkte zugeordnet ist.

Der Erfindung liegt die Aufgabe zugrunde, eine Einrichtung zur Bestimmung der Abweichung der Lage von *n* Punkten von Ihren *n* disjunkten Referenzlagen zur Verfügung zu stellen, welche eine schnelle Messung der *n* Abweichungen oder Distanzen erlaubt.

Diese Aufgabe wird durch eine Einrichtung mit den Merkmalen gemäß Anspruch 1 und durch ein Verfahren gemäß Anspruch 19 gelöst.

In der erfindungsgemäßen Einrichtung zur Bestimmung der Abweichung der Lage von *n* Punkten von ihren disjunkten Referenzlagen mit einer Quelle elektromagnetischer Strahlung, einer Abbildungsoptik und einem fotosensitiven Detektor werden zeitlich simultan oder parallel *n* Signale durch den Detektor erzeugt, wobei jedes der *n* Signale eindeutig einem der *n* Punkte zugeordnet ist. Dazu wird, von einer Lichtquelle ausgehend, durch eine geeignete Abbildungsoptik Licht auf die Fläche der *n* Punkte gestrahlt, welches von der Fläche der *n* Punkte zumindest teilweise reflektiert wird. Durch eine geeignete Abbildungsoptik wird das reflektierte Licht einem fotosensitiven Detektor zugeführt. Entsprechend der Intensität des auftreffenden Lichtes wird ein Signal erzeugt, typischerweise in elektrischer Form. In vorteilhafter Weise kann dadurch eine Messung in einer bestimmten Zeit für *n* Punkte oder Reflexionspunkte durchgeführt werden. Mit der erfindungsgemäßen Einrichtung kann eine schnelle und einfache Messung und Generierung von *n* Signalen erreicht werden, welche entweder zur Regelung der Intensität der Lichtquelle in einem Array, welches in einer Bebilderungseinrichtung insbesondere für Druckformen verwendet wird, oder aber zur Veränderung der Fokuslagen entsprechender Abbildungsoptik oder Abbildungsoptiken für die Bebilderungseinrichtung mit dem Array herangezogen werden kann. Eine derartige Einrichtung kann in kompakter Form realisiert werden und ist ebenfalls mit geringen Kosten verbunden, da nur eine Quelle elektromagnetischer Strahlung eingesetzt wird, gleichzeitig aber mit entsprechender Auflösung die Lage von *n* Punkten oder Reflexionspunkten bestimmt werden kann.

Ein Ziel der vorliegenden Erfindung ist die Erreichung einer schnellen, ortsaufgelösten Detektion von Unebenheiten einer zu bebildernden Druckform, insbesondere die Schaffung einer Einrichtung, welche dazu geeignet ist, die Information über die Unebenheiten der Druckform in eine direkt oder indirekt detektierbare Positionsänderung eines Lichtstrahls oder eines Bereiches eines Lichtstrahls umzuwandeln.

In bevorzugter Ausführungsform ist die Quelle elektromagnetischer Strahlung eine einzelne, welche kohärente oder inkohärente Strahlung emittiert und dessen Licht bei Passage eines Teils der Abbildungsoptik alle *n* Punkte, deren Lageabweichung von ihren disjunkten Referenzlagen bestimmt werden soll, trifft. Der fotosensitive Detektor weist eine Anzahl *n* von einander unabhängiger fotosensitiver Elemente auf. Jedem der *n* voneinander unabhängigen fotosensitiven Elemente ist genau ein Punkt oder Reflexionspunkt zugeordnet, dessen Lageabweichung zur Referenzlage bestimmt werden soll. Insbesondere handelt es sich dabei um eine Abstandsabweichung. Mit anderen Worten die Abbildung durch einen weiteren Teil der Abbildungsoptik nach Reflexion des Lichtes von der Reflexionsfläche, in dessen Bereich die *n* Punkte liegen, ist derart angelegt, dass das vom Bereich eines der *n* Punkte reflektierte Licht eindeutig einem der *n* voneinander unabhängigen fotosensitiven Elemente erfolgt. Die Abweichung der Lage eines der *n* Punkte von seiner Referenzlage führt zu einem anderen Lichtweg als der Lichtweg des vom Punkt in Referenzlage reflektierten Lichtes durch die Abbildungsoptik. Die Lageinformation wird somit in eine Weginformation umgewandelt. In der Abbildungsoptik ist wenigstens ein Element vorgesehen, welche die Weginformation für jeden zu einem der *n* Punkte gehörenden Lichtweg durch die Abbildungsoptik in eine Lichtintensitätsinformation umwandelt. Besonders vorteilhaft ist dazu die Verwendung eines optischen Elementes mit einer ortsabhängigen Transmission, sei sie kontinuierlich oder diskret positionsabhängig. Mit anderen Worten kann die erfindungsgemäße Einrichtung zur Bestimmung der Abweichung der Lage von *n* Punkten von ihren *n* disjunkten Referenzlagen auch als parallelverarbeitender optischer Entfernungsmesser bezeichnet werden.

Die erfindungsgemäße Einrichtung zu Bestimmung der Abweichung der Lage von *n* Punkten von ihren disjunkten Referenzlagen kann derart ausgeprägt sein, dass ausgehend von einer Quelle elektromagnetischer Strahlung eine Abbildungsoptik mit einer Symmetrieebene, welche parallel zur optischen Achse der Bebilderungseinrichtung verläuft, genutzt wird. Alternativ dazu kann es vorteilhaft sein, eine Ausprägung der erfindungsgemäßen Einrichtung zu realisieren, deren Abbildungsoptik einen schräg zur Druckform einfallenden, kollimierten Strahl auf einen Detektor abbildet. In Abhängigkeit der Auslenkung einzelner Bereiche der Druckform aus der Fokuslage können die Schnittpunkte zwischen dem Beleuchtungsstrahl und der Druckform verschiedene Orte im Raum einnehmen. Der reflektierte Strahl wird so abgebildet, dass die Ortsinformation in einer Richtung, typischerweise der Richtung der Zylinderachse, wenn die Druckform auf einem rotationssymmetrischen Element aufgebracht ist, erhalten bleibt, und das die Ortsinformation in einer Richtung senkrecht dazu, bestimmt durch die Lage der *n* Punkten, in eine Intensitätsinformation umgewandelt wird.

Weitere Vorteile und vorteilhafte Weiterbildungen der Erfindung werden anhand der nachfolgenden Figuren und deren Beschreibung dargestellt. Es zeigen im Einzelnen:
- Fig. 1: schematische Darstellung des Strahlengangs durch eine vorteilhafte Ausführungsform der erfindungsgemäßen Einrichtung,
- Fig. 2: schematische Darstellung zur Erläuterung, wie die Lageabweichung eines Reflexionspunktes zu unterschiedlichen Lichtwegen durch eine vorteilhafte Ausführungsform der erfindungsgemäßen Einrichtung führt,
- Fig. 3: schematische Darstellung einer vorteilhaften Ausführungsform der erfindungsgemäßen Einrichtung mit zusätzlicher Einrichtung zur Bestimmung der Intensität des reflektierten Lichtes,
- Fig. 4: schematische Darstellung einer alternativen vorteilhaften Ausführungsform der erfindungsgemäßen Einrichtung mit einem optischen Element mit stufenförmiger Transmission in Abhängigkeit der räumlichen Position,
- Fig. 5: schematische Darstellung des Strahlengangs durch eine alternative Ausführungsform der erfindungsgemäßen Einrichtung mit einem schrägeinfallenden, kollimierten Beleuchtungsstrahl,
- Fig. 6: schematische Darstellung der Erzeugung eines Lichtteppichs als Reflexionslinie auf der Druckform,
- Fig. 7: schematische Darstellung zur Erläuterung der Umwandlung von Ortsinformation in Intensitätsinformation in der erfindungsgemäßen Einrichtung,
- Fig. 8: schematische Darstellung des Strahlengangs in der alternativen Ausführungsform der erfindungsgemäßen Einrichtung in dem dem Lichtteppich nachgeordneten Teil der Abbildungsoptik,
- Fig. 9: schematische Darstellung einer ersten vorteilhaften Weiterbildung der alternativen Ausführungsform der erfindungsgemäßen Einrichtung,
- Fig. 10: schematische Darstellung einer zweiten vorteilhaften Weiterbildung der alternativen Ausführungsform der erfindungsgemäßen Einrichtung.

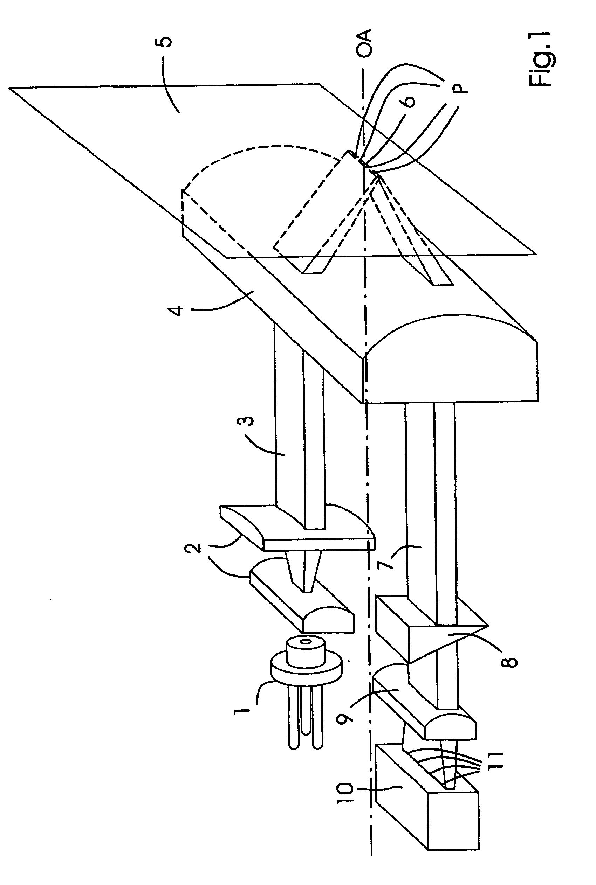

Die Figur 1 zeigt eine vorteilhafte Ausführungsform der erfindungsgemäßen Einrichtung in schematischer Darstellung des Strahlengangs. In bevorzugter Ausführungsform ist die Lichtquelle 1 ein Diodenlaser. Das von ihm ausgehende Licht wird durch eine erste Abbildungsoptik 2, welche vorteilhafterweise nicht-rotationssymmetrische, asphärische optische Elemente, beispielsweise Zylinderlinsen aufweist, in einen Laserstrahl 3 transformiert, dessen Breite die durch die *n* Bildpunkte *P*, hier vier, der hier nicht gezeigten Bebilderungseinrichtung definierte, typischerweise ein Diodenlaserarray, Schreibfläche überdeckt und dessen Höhe derart gewählt ist, dass die Divergenz des Strahles längs der Ausbreitung vernachlässigt werden kann. Der Laserstrahl wird off-axis durch eine Objektivoptik, hier eine Zylinderlinse 4 auf die Druckform 5 fokussiert, sodass auf dieser ein schmaler Lichtteppich 6 abgebildet wird. In der Figur 1 ist eine ebene Druckform gezeigt, es kann sich aber ohne Beschränkung der Allgemeinheit auch um eine Druckform mit makroskopisch gekrümmter Oberfläche handeln, mikroskopisch bzw. lokal für die Abbildung der erfindungsgemäßen Einrichtung ist diese Krümmung vernachlässigbar. Die Laserabweichung eines Punktes ist also insbesondere eine Abstandsabweichung zu einer Referenzebene. Die Breite des Lichtteppichs 6 entspricht der durch die n Bildpunkte *P* der Bebilderungseinrichtung definierten Breite der Schreibfläche auf der Druckform 5. Das von der Druckform 5 reflektierte Licht wird durch die Objektivoptik 4 kollimiert und in den Laserstrahl 7 transformiert. Der Laserstrahl 7 trifft auf ein optisches Element mit einer ortsabhängigen Transmission, bevorzugterweise auf einen Graukeil 8. Der Graukeil 8 besitzt eine vom Abstand zur optischen Achse *OA* des Abbildungssystems abhängige Transmission, typischerweise ist die Transmission für kleine Entfernungen größer als für große. Für dieses optische Element ist die Brechung bei Ein- oder Austritt des Lichtes vernachlässigbar. Das transmittierte und gegebenenfalls in seiner Intensität abgeschwächte Licht wird durch eine fokussierende Optik, hier Zylinderlinse 9 auf einen fotosensitiven Detektor 10 fokussiert. In bevorzugter Ausführungsform weist der fotosensitive Detektor *n* Fotodioden 11 auf.

Der Lichtteppich 6 auf der Druckform 5 kann im Betriebsfall der Einrichtung auch an einer räumlich getrennten Stelle der *n* Bildpunkte der Lichtquellen der Bebilderungseinrichtung liegen. Die Druckform 5 ist dann relativ bewegbar, sodass ein Punkt ihrer Fläche zunächst in den Lichtteppich 6, welcher die Dimensionen der durch die *n* Bildpunkte definierte Fläche hat, fällt und dann unter die Fläche der *n* Bildpunkte *P* der Bebilderungseinrichtung. Da die Parameter der Translation oder Rotation bekannt sind, kann aus der vorhergehenden Messung auf den aktuellen bei der Bebilderung vorliegenden Abstand geschlossen werden.

Die in Figur 1 dargestellte Geometrie ist nur eine vorteilhafte Ausführungsform der Erfindung. Es ist auch denkbar, dass weitere optische Elemente vorteilhaft, insbesondere zur Strahlformung, hinzugefügt werden können. Dabei haben sich reflektierende optische Elemente bewährt.

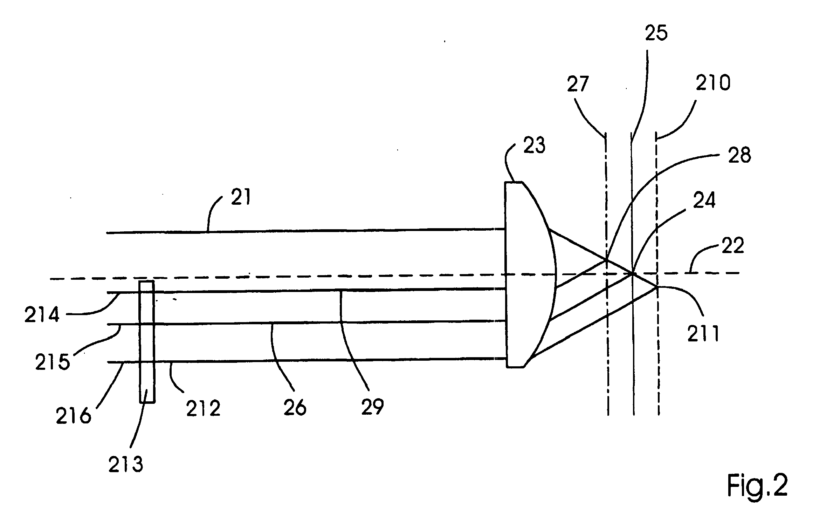

Die Figur 2 zeigt eine schematische Darstellung zur Erläuterung, wie die Lageabweichung der Druckform und damit der Reflexionspunkte zu unterschiedlichen Lichtwegen durch die erfindungsgemäße Einrichtung führt. Zur Vereinfachung der Argumentation ist ohne Beschränkung der Allgemeinheit nur ein sagittaler Schnitt durch die erfindungsgemäße Einrichtung, also senkrecht zur durch den Lichtschnitt 6 definierten Geraden. Der Lichtstrahl 21 breitet sich von links kommend parallel zur optischen Achse 22 aus. Durch die Linse 23 wird er zur optischen Achse 22 hin gebrochen. Als Arbeitspunkt oder Referenzlage ist der Schnittpunkt der Ebene 25 mit der optischen Achse 22 vorgesehen. Im allgemeinen Fall, wenn der Lichtstrahl 21 unterschiedliche Halbachsen in meridionaler und sagittaler Richtung aufweist, entsteht auf der Ebene 25 der Lichtteppich 24. Das von der Ebene 25 reflektierte Licht wird von der Linse 23 wiederum in einen Stahl 26 transformiert, welcher sich parallel zur optischen Achse 22 ausbreitet. Der von der Linse 23 gebrochene Lichtstrahl 21 schneidet eine Ebene 27, welche zwischen der Linse 23 und der Referenzebene 25 liegt, im Lichtteppich 28. Das vom Lichtteppich 28 reflektierte Licht wird durch die Linse 23 in einen Strahl 29 transformiert, welcher sich entlang der optischen Achse 22 parallel ausbreitet. Der Abstand der Strahles 29 zur optischen Achse ist geringer als der Abstand des Strahles 26. Eine Ebene 210, welche weiter entfernt von der Linse 23 als die Ebene 25 liegt, schneidet der an der Linse 23 gebrochene Lichtstrahl 21 im Lichtteppich 211. Das vom Lichtteppich 211 ausgehenden Licht wird durch die Linse 23 in einen Strahl 212 transformiert, welcher sich parallel der optischen Achse 22 entlang ausbreitet. Der Abstand des Strahles 212 zur optischen Achse ist größer als derjenige des Strahles 26. Aus der Figur 2 ist ersichtlich, dass in einer derartigen Anordnung die Lage, also die Distanz von Ebenen vor und hinter der Referenzebene 25 in funktionellem Zusammenhang zum Abstand aus der Abbildungsoptik austretenden Parallelstrahlen, in welche das von den Ebenen reflektierte Licht transformiert wurde, zur optischen Achse 22 steht. Mit anderen Worten gesagt, wird die Lageinformation der Ebenen 27 bzw. 210 zur Referenzebene 25 in eine Weginformation des Abstands der parallelen Strahlen 26, 29 und 212 transformiert. Diese Weginformation kann vermittels eines optischen Elementes 213, welches eine vom Abstand zur optischen Achse 22 abhängige Transmission aufweist, in der Lichtintensität der Strahlen 26, 29 und 212 kodiert werden. Beispielsweise nach Durchgang durch das optische Element mit ortsabhängiger Transmission 213 weist vorteilhafterweise der Lichtstrahl 214 eine geringere Intensität als der Lichtstrahl 215 aus, welcher wiederum eine geringere Intensität als der Lichtstrahl 216 aufweist. Mit anderen Worten die Weginformation, welche in der Lage der Parallelstrahlen zur optischen Achse enthalten ist, wird in eine Intensitätsinformation überführt, sodass die Lichtstrahlen 214, 215 und 216 durch eine hier nicht gezeigte Abbildungsoptik auf einen hier nicht gezeigten Detektor projiziert werden können, wobei die Information über die Lage der Reflexionsebene erhalten bleibt.

Durch die in Figur 1 gezeigte bevorzugte Ausführungsform der erfindungsgemäßen Einrichtung wird die anhand Figur 2 erläuterte Informationstransformation der Lage über den Weg in die Intensität für alle *n* Punkte *P* parallel ausgeführt. Dazu handelt es sich bei dem optischen Abbildungssystem in Figur 1 um eine Abbildungsoptik, welche einen Lichtteppich 6 auf der Druckform 5 erzeugt, welcher unterschiedlichen Halbachsen in Sagittal- und Meridionalrichtungen aufweist. Die Fläche des Lichtteppichs 6 überdeckt dabei die durch die *n* Bildpunkte *P* der Bebilderungseinrichtung definierten Fläche. Das vom Lichtschnitt 6 reflektierte Licht wird durch die Abbildungsoptik auf eine Detektorfläche 10 projiziert, und einzelne Anteile dieser Fläche sind jeweils einer der *n* Fotodioden 11 zugeordnet. Mit anderen Worten auf dem Detektor wird das projizierte Bild des Lichtschnitts 6 in wenigstens *n* Anteile diskretisiert, sodass zwischen einzelnen Bereichen, in welchen jeweils zwei der *n* Punkte liegen, diskriminiert wird. Jedem Anteil ist dabei eindeutig einer der *n* Bildpunkte *P* der Lichtquellen der Bebilderungseinrichtung zugeordnet. Es werden also zeitlich im Wesentlichen, das heißt insbesondere im Rahmen des Ansprechverhaltens des Detektors, simultan oder parallel Signale durch den Detektor erzeugt, wobei jedes der *n* Signale eindeutig einem der *n* Punkte zugeordnet ist. Weisen nun Anteile des Lichtschnitts 6 unterschiedliche Entfernungen zur Objektivoptik 4 auf, mit anderen Worten die Reflexion findet in Ebenen statt, deren Lage von der Lage der Referenzebene abweicht, so wird innerhalb der erfindungsgemäßen Einrichtung diesem Anteil die entsprechende im funktionellen Zusammenhang stehende Intensitätsinformation zugeordnet. Auf diese Weise ist eine parallelverarbeitende optische Entfernungsmessung ermöglicht.

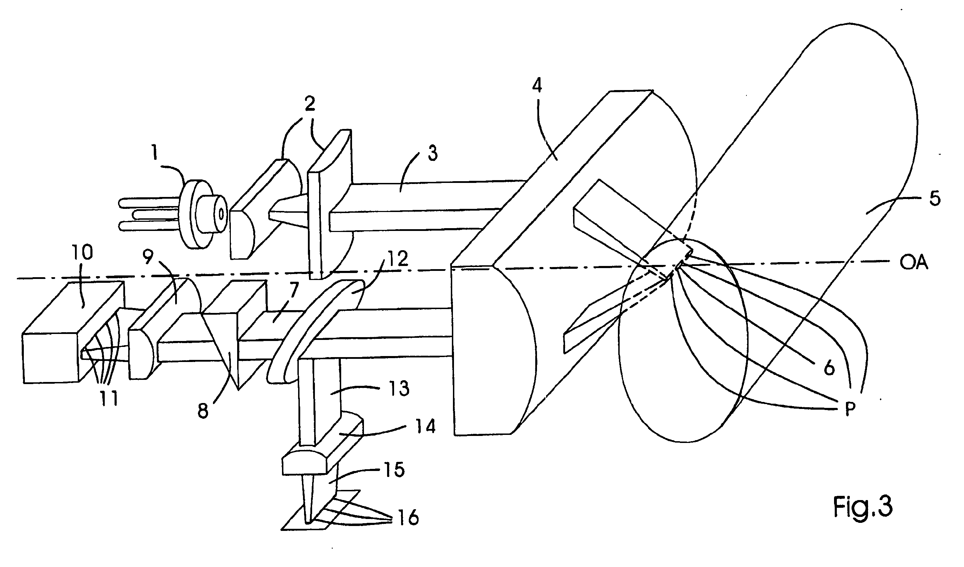

Figur 3 zeigt eine vorteilhafte Weiterbildung der erfindungsgemäßen Einrichtung. In Figur 3 ist schematisch die erfindungsgemäße Einrichtung mit zusätzlichen optischen Elementen gezeigt, welche zur Bestimmung der Intensität des von der Druckform reflektierten Lichtes dienen. Die Figur 3 zeigt zunächst die schon in Figur 1 beschriebenen Elemente 1 bis 11. Des Weiteren ist in den Lichtweg des Laserstrahls 7 ein Strahlteiler 12 eingefügt, durch welchen ein Lichtstrahl 13 ausgekoppelt wird. Dieser wird vermittels einer Zylinderlinse 14 auf einen weiteren fotosensitiven Detektor 15 abgebildet. Der fotosensitive Detektor 15 weist n Fotodioden 16 auf. Der Strahlteiler 12 kann ein beliebiges, bekanntes Teilungsverhältnis zwischen transmittiertem und reflektiertem Strahl aufweisen. Ein wesentlicher Punkt bei dieser Anordnung ist, dass unabhängig von der Lage der Druckform 5 zur Objektivoptik 4 und damit von der Lage des Lichtschnitts 6, welche zu unterschiedlichen Lichtwegen der reflektierten Strahlung führt, eine bestimmte aus dem Teilungsverhältnis des Strahlteilers 12 und der bekannten Intensität des von der Lichtquelle 1 emittierten Lichtes die reflektierte Intensität, also diejenige des Lichtstrahles 7 bestimmt werden kann. Durch Bildung des Quotienten des Intensitätssignals von korrespondierenden Fotodioden 11 und 16 kann ein von der vorliegenden Leistung des reflektierten Strahls, die insbesondere von der aktuellen Lichtleistung der Lichtquelle 1 abhängt, unabhängiges Regelsignal aus dem Signal des fotosensitiven Detektors 10 generiert werden.

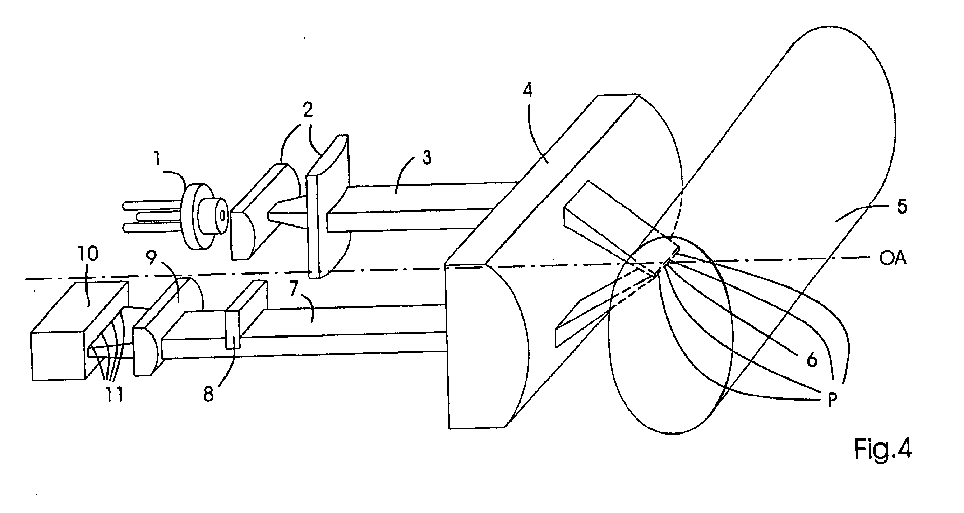

In der Figur 4 ist schematisch eine alternative Ausführungsform der erfindungsgemäßen Einrichtung mit einem optischen Element mit stufenförmiger Transmission in Abhängigkeit des Abstands von der räumlichen Achse gezeigt. Besonders vorteilhaft ist eine stufenförmige Transmission von 0 und 1. Zur Ausnutzung einer derartigen Transmission wird der Lichtstrahl 7 derart ausgeweitet, dass bei Reflexion am Lichtschnitt 6 der Druckform 5 in Referenzlage die Hälfte des Lichtstrahles durch die Transmissionsstufe 0 ausgeblendet wird. Eine Lageabweichung der Reflexionsebene wird, wie bereits erwähnt, in die Lageinformation des reflektierten Parallelstrahls transformiert. Je nach Abstand des reflektierten Parallelstrahls zur optischen Achse *OA* wird also ein größerer oder geringerer Anteil durch die Transmissionsstufe 0 vom gesamten Lichtstrahl ausgeblendet. Auf diese Weise wird eine Intensitätsinformation dem Lichtstrahl aufgeprägt. Da das gesamte transmittierte Licht auf einen Detektor projiziert wird, also gebündelt wird, sind kohärente Effekte, wie die Beugung an der Kante, die Intensitätsmodulation gemäß der Fresnelschen Integrale, im Fall kohärenten Lichtes vernachlässigbar.

Je nachdem, ob das optische Element mit ortsabhängiger Transmission eine stufenartige bzw. sich über einen räumlich kleinen Bereich ändernde Transmissionscharakteristik aufweist - z. B. eine Messerschneide oder ein halbseitig beschichteter Spiegel mit einem schmalen Übergangsbereich zwischen transmittierendem und nichtttransmittierendem Teil - oder einen Graukeil mit einem breiten Übergangsbereich umfasst, kann die Höhe des Lichtschnittes gewählt werden, mit dem die Druckform beleuchtet wird. Im Fall der Messerschneide sollte der Lichtschnitt so hoch sein, dass die Messerschneide auch bei maximaler Auslenkung der Druckform das Bild des Lichtschnitts in der Detektionsebene teilt, d. h. immer zwischen 1% und 99% transmittiert wird. Im Falle eines Graukeils kann der Beleuchtungsstrahl eine geringe Höhe aufweisen, so dass immer der gesamte Lichtschnitt durch den Graukeil tritt, so dass seine Position möglichst genau über den Grauwert bestimmt werden kann.

Als Lichtquelle 1 kann jeder Lasertyp verwendet werden, in bevorzugter Ausführungsform handelt es sich um einen Diodenlaser oder Festkörperlaser. Alternativ kann aber auch eine Lichtquelle nicht kohärenten Lichtes eingesetzt werden. Die Wellenlänge der Lichtstrahlung wird vorteilhafterweise gut von der Druckform reflektiert. In bevorzugter Ausführungsform liegt die Wellenlänge im roten Spektralbereich, beispielsweise 670 nm. Üblicherweise erfolgt der Einsatz des Lasers im Dauerstrichbetrieb. Ein Pulsbetrieb ist jedoch vorteilhaft, um die Unempfindlichkeit gegen weitere, unerwünschte Reflexe zu erhöhen.

Die in den Figuren gezeigte schematische Topologie und Geometrie der Abbildungsoptik kann durch andere optische Elemente, wie sphärische und asphärische Linsen, anamorphotische Prismen, Spiegel und dergleichen, zu einer vorteilhaften Strahlformung des Lichtstrahles 3 bzw. des Lichtstrahls 7 ergänzt werden.

In einer vorteilhaften Weiterbildung der Erfindung wird das Regelsignal in einen Mittelwert, welcher aus der Summe der auf den n Fotodetektoren gemessenen Intensität errechnet wird, zerlegt. Der Mittelwert wird dann als globaler Regelwert für die Bewegung der Fokuslinie der Bebilderungseinrichtung verwendet. Die Differenz zwischen den Regelsignalen der einzelnen Fotodioden und dem Mittelwert dienen als Regelsignal für die einzelnen Laser des Laserarrays der Bebilderungseinrichtung.

In einer weiteren alternativen Ausführungsform kann die Anzahl der Fotodioden im fotosensitiven Detektor auch kleiner sein als die Anzahl der Laserstrahlen der Bebilderungseinrichtung. In diesem Fall dient das Regelsignal, welches aus der auf einer bestimmten Fotodioden eintreffenden Intensität generiert wird, für mehrere aneinander liegende Laserstrahlen als Regelsignal. Wenn die Anzahl der Fotodioden im fotosensitiven Detektor größer ist als die Anzahl der Laserstrahlen der Bebilderungseinrichtung, kann beispielsweise der Mittelwert von mehreren Regelsignalen angrenzender Fotodioden für einen Laserstrahl verwendet werden. Die bereits erwähnte Diskretisierung des Bildes des Lichtschnittes kann also kleiner oder größer als die durch die Anzahl n der Lichtquellen der Bedienungseinrichtung vorgegebene sein.

In einer vorteilhaften Weiterbildung der Erfindung kommen mikrooptische Komponenten zum Einsatz. Beispielsweise können die fokussierenden Zylinderlinsen 9 und 14 aus mehreren optischen Komponenten aufgebaut sein und ein Array von Linsen aufweisen.

Vorteilhafterweise ist zur Vermeidung von Einstrahlung von Laserstrahlung der Bebilderungseinrichtung auf den fotosensitiven Detektoren der erfindungsgemäßen Einrichtung ein entsprechendes optisches Bandpassfilter vorgesehen, welches nur die Wellenlänge der Lichtquelle 1, welche zur Erzeugung der Reflexionspunkte im parallelverarbeitenden optischen Entfernungsmesser dient, transmittiert. In einer alternativem Ausführungsform der Erfindung handelt es sich um fotosensitiver Detektoren, welche Fotozellen, Fotomultiplier oder Charged Coupled Displays (CCD) aufweisen.

Eine derartige erfindungsgemäße Einrichtung kann getrennt von der Bebilderungseinrichtung der Druckform ausgeführt oder aber ganz oder teilweise mit dieser integriert sein. Mit anderen Worten Teile der Abbildungsoptik der Bebilderungseinrichtung und der erfindungsgemäßen Einrichtung können gemeinsam benutzt werden.

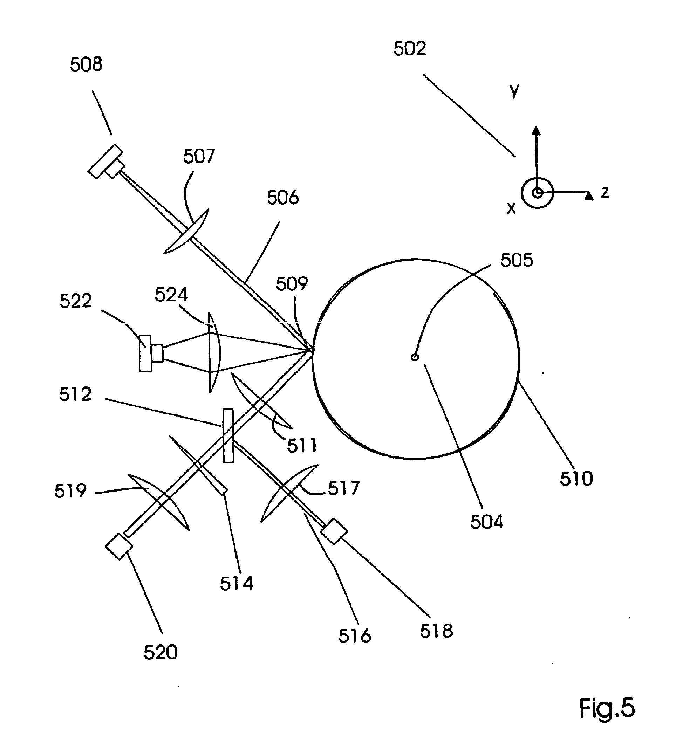

In der Figur 5 ist schematisch eine Darstellung des Strahlengangs durch eine alternative Ausführungsform der erfindungsgemäßen Einrichtung gezeigt. Ein Koordinatensystem 502 mit den kartesischen Koordinaten x, y und z bezeichnet beispielsweise in einem sogenannten Outdrum-Druckformbelichter oder einer Direct Imaging-Druckmaschine die Lage eines Zylinders 504. Die Rotationsachse 505 liegt dabei in x Richtung, die z Richtung ist durch die optische Achse, entlang der sich das aus einer Bebilderungslichtquelle 522 ausbreitende Licht auf eine Druckform 510, welche auf dem Zylinder 504 aufgenommen ist, definiert, und die y Richtung bezeichnet die dritte Raumrichtung, senkrecht zur x- und z Richtung. Ein Beleuchtungsstrahl 506, typischerweise der kollimierte Strahl einer Lichtquelle 508, beispielsweise ein Laser, wird mittels einer zylindersymmetrischen Optik 507 auf die Druckform 510 abgebildet. Die Projektion des Beleuchtungsstrahls 506 bildet auf der Druckform 510 einen Lichtteppich 509. Dieser Lichtteppich 509 ist bevorzugt ein rechteckiger, möglichst homogen ausgeleuchteter Bereich, dessen Breite der Breite des zu detektierenden Bereichs entspricht. Bevorzugt trifft der Beleuchtungsstrahl 506 unter einem Winkel von 45° auf die Druckform 510 auf und wird im rechten Winkel zu seiner Einfallsrichtung reflektiert. Der Lichtteppich 509 wird mittels einer Zwischenoptik 511 in eine Umwandlungsebene 514 abgebildet. In dieser Umwandlungsebene 514 befindet sich ein optisches Element mit ortsabhängiger Transmission. Es folgt mittels einer weiteren Abbildungsoptik 519 die Fokussierung auf einen fotosensitiven Detektor 520. Des weiteren kann in einer vorteilhaften Weiterbildung, wie in Figur 5 gezeigt, ein Strahlteiler 512 vor der Umwandlungsebene 514 in den Strahlengang eingebracht werden. Auf einem identischen Strahlengang 516 wird mittels einer Abbildungsoptik 517 ein Teil des Lichts auf einen fotosensitiven Detektor 518 ausgekoppelt.

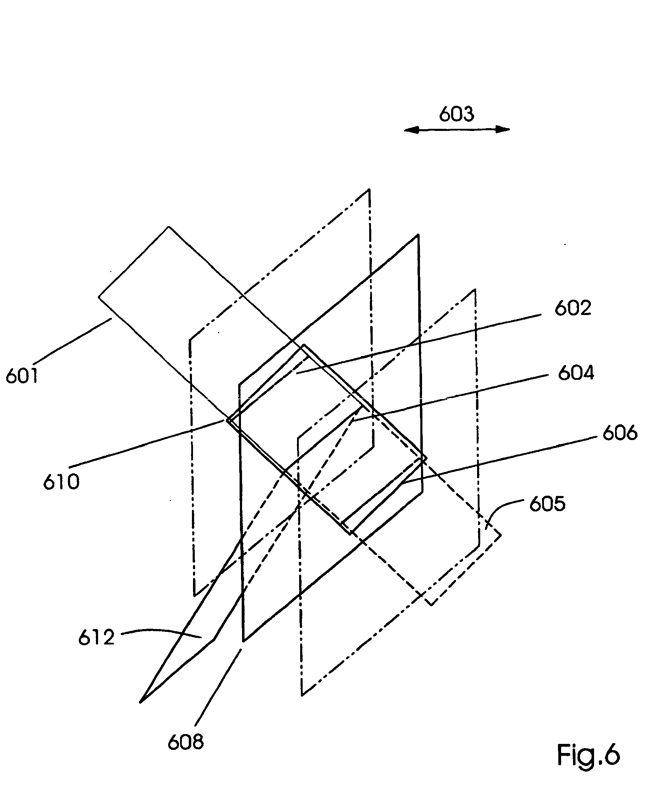

Die Figur 6 dient der Erläuterung in einer schematischen Darstellung, wie ein Lichtteppich als Reflexionslinie auf der Druckform erzeugt wird und wie die Ortsinformation in eine Weginformation des reflektierten Lichtes transformiert wird. Die Figur 6 zeigt einen Beleuchtungsstrahl 601, welcher hier beispielhaft unter einem Winkel von 45° auf eine Druckform trifft und im wesentlichen im rechten Winkel zur Einfallsrichtung reflektiert wird. Die Druckform kann unterschiedliche Lagen in z Richtung, der Normalenrichtung 603 aufweisen. In einer ersten Position der Druckform 608 wird eine erste Schnittlinie 602 erzeugt, in einer zweiten Position der Druckform 609 eine zweite Schnittlinie 604, und in einer dritten Position der Druckform 608 eine dritte Schnittlinie 606. Beispielhaft ist in der Figur 6 die Situation gezeigt, in der sich die Druckform 608 in einer Lage befindet, in welcher in der Schnittlinie 604 der Beleuchtungsstrahl 601 als Strahl 612 reflektiert wird. Ohne Druckform 608 würde sich der Strahl als Beleuchtungsstrahl 605 fortsetzen. Die beispielhaft gezeigten drei Schnittlinien 602, 604 und 606 liegen in einer Linienebene 610. Mit anderen Worten: Variiert die Druckform 608 ihre Position in z Richtung, also in Normalenrichtung 603, so bilden die möglichen Positionen der Schnittlinie 602, 604 oder 606 eine Ebene im Raum, die durch die Einfallsrichtung des Beleuchtungsstrahls und eine der Schnittlinien, beispielsweise die zweite Schnittlinie 604, definiert ist.

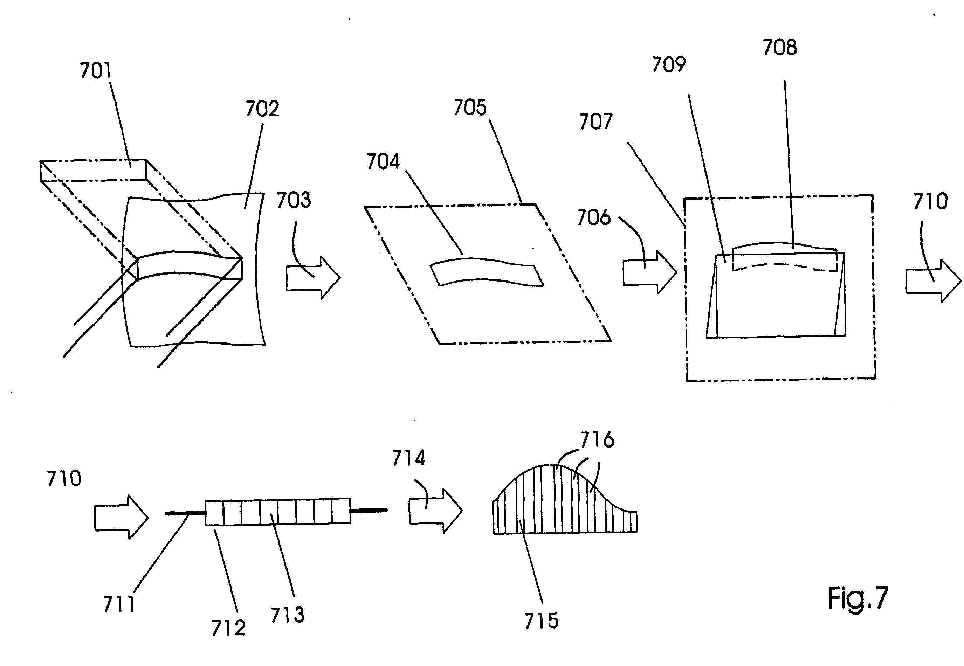

Anhand der Figur 7 wird in einer schematischen Darstellung die Umwandlung von Ortsinformation in Intensitätsinformation in der erfindungsgemäßen Einrichtung erläutert. Die Figur 7 zeigt schematisch wie auf einer Druckform 702 ein Lichtschnitt 701 liegt. Mittels der durch den Pfeil angedeuteten Reflexionstransformation wird die Lage des Lichtschnitts 701 in eine Weginformation des reflektierten Strahls 704 in der Linienebene 705 transformiert. Eine Abbildungstransformation 706 überträgt diese Information in die Umwandlungsebene 707 als einen Bildfleck 708. Die Umwandlungsebene 707 weist ein optisches Element mit ortsabhängiger Transmission 709 auf. Dieses bewirkt eine Intensitätstransformation 710 derart, dass in einer Detektionsebene 711 auf den Fotodioden 713 eines fotosensitiven Detektors 712 eine bestimmte Lichtintensität gemessen wird. Eine Signaltransformation 714 wird zur Generierung eines Helligkeitssignals 715 in Abhängigkeit der Messungen einzelner Fotodioden 713 generiert. Damit sind Signale 716 für einzelne Bereiche innerhalb des Lichtschnittes als Funktion der Lage generiert. Die Information im Helligkeitssignal 715 kann dann seriell oder parallel als Regelsignal an eine Einrichtung übergeben werden, welche die optischen Parameter des Bebilderungsstrahls an die Unebenheiten der Druckform anpasst.

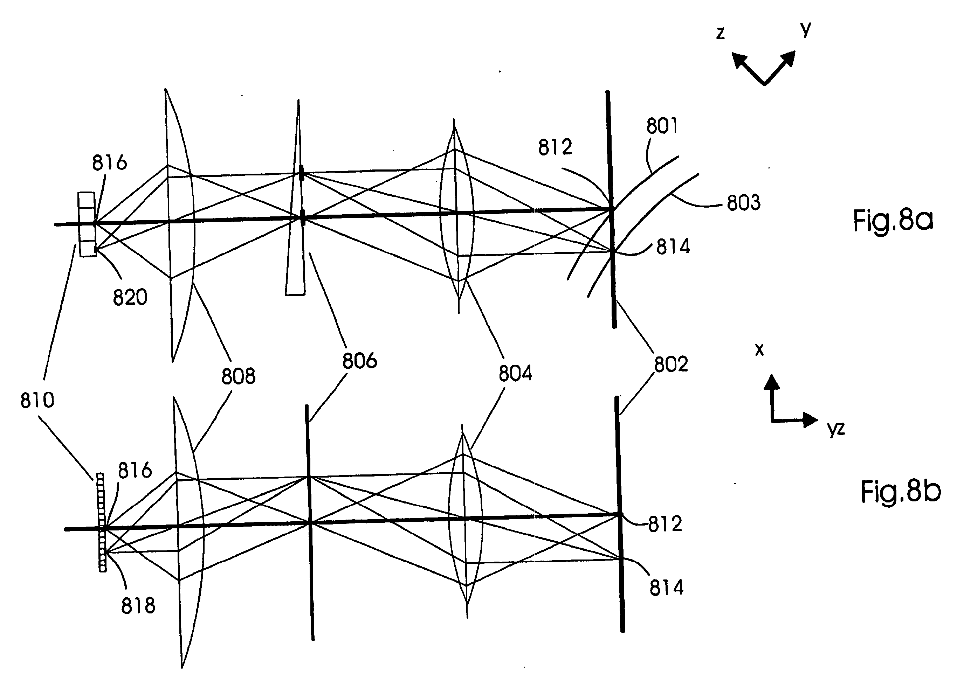

Die Figur 8 zeigt schematisch eine Darstellung des Strahlengangs in einer Ausführungsform der dem Lichtteppich nachgeordneten Teil der Abbildungsoptik. Im Teilbild 8a ist ein Schnitt in der yz-Ebene gezeigt, während im Teilbild 8b ein Schnitt entlang der x-Koordinate dargestellt ist. Im Teilbild 8a ist eine erste Lage der Druckform 801 und eine zweite Lage der Druckform 803 und eine Linienebene 802 gezeigt, welche zwei Schnittpunkte aufweisen: Einen ersten Reflexionspunkt 812 und einen zweiten Reflektionspunkt 814. Mittels einer rotationssymmetrischen Abbildungsoptik 804, vorzugsweise eine sphärische Linse, werden der erste Reflexionspunkt 812 und der zweite Reflektionspunkt 814 in eine Umwandlungsebene 806 abgebildet. In dieser Umwandlungsebene 806 befindet sich ein optisches Element mit ortsabhängiger Transmission. Von dort findet mittels einer weiteren rotationssymmetrischen Abbildungsoptik eine Abbildung auf einen fotosensitiven Detektor 810 statt, wobei dem ersten Reflexionspunkt 812 ein erster Detektionspunkt 816 und dem zweiten Reflexionspunkt 814 ein dritter Detektionspunkt 820 zugeordnet sind. Das Teilbild 8b zeigt die Situation alternativ im Schnitt entlang der x-Koordinate mit einem ersten Detektionspunkt 816 und einem zweiten Detektionspunkt 818.

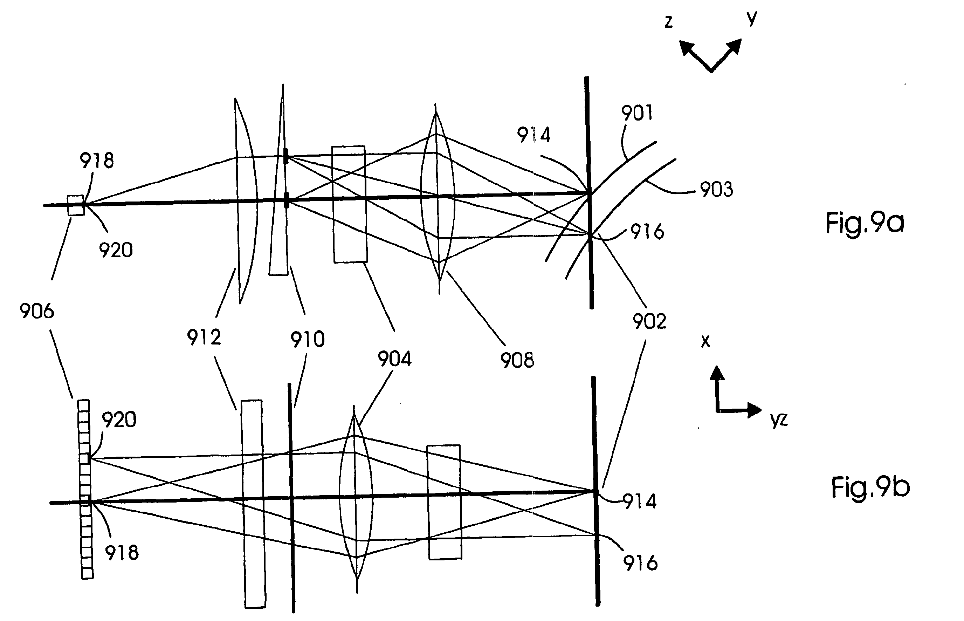

Die Figur 9 zeigt eine schematische Darstellung einer ersten vorteilhaften Weiterbildung der alternativen Ausführungsform der erfindungsgemäßen Einrichtung. Das Teilbild 9a zeigt einen Schnitt in der yz-Ebene, und im Teilbild 9b ist die Situation in einem Schnitt entlang der x-Achse gezeigt. Die Oberfläche der Druckform schneidet in einer ersten Lage 901 eine Linienebene 902 in einem ersten Reflexionspunkt 914, während die Oberfläche der Druckform in einer zweiten Lage 903 die Linienebene 902 in einem zweiten Reflexionspunkt 916 schneidet. Der erste Reflexionspunkt 914 und der zweite Reflexionspunkt 916 werden mittels einer wenigstens zweiteiligen Abbildungsoptik, bestehend aus einer ersten zylindersymmetrischen Abbildungsoptik 904 und einer zweiten zylindersymmetrischen Abbildungsoptik 908, auf eine Umwandlungsebene 910, in welcher sich ein optisches Element mit ortsabhängiger Transmission befindet, abgebildet. Die erste zylindersymmetrische Abbildungsoptik 904 und die zweite zylindersymmetrische Abbildungsoptik 908 weisen dabei Symmetrieachsen auf, welche im wesentlichen senkrecht zueinander stehen. Mittels einer dritten zylindersymmetrischen Abbildungsoptik 912 wird der erste Reflexionspunkt 914 in einen ersten Detektionspunkt 918 abgebildet, während der zweite Reflexionspunkt 916 in einen zweiten Detektionspunkt 920 abgebildet wird, in der Darstellung des Teilbildes 9a der Figur 9 liegen diese Punkte zusammen. Das Teilbild 9b der Figur 9 zeigt durch eine Darstellung des Schnittes in x-Richtung, wie die Abbildung in x- und yz Richtung voneinander getrennt sind. Ein vom ersten Reflexionspunkt 914 in dieser Richtung liegender Strahl wird durch die erste zylindersymmetrische Abbildungsoptik 904 beeinflusst und in den ersten Detektionspunkt 918 abgebildet. Entsprechend wird Licht ausgehend vom zweiten Reflexionspunkt 916 mittels der ersten zylindersymmetrischen Abbildungsoptik 904 in einen zweiten Detektionspunkt 920 abgebildet.

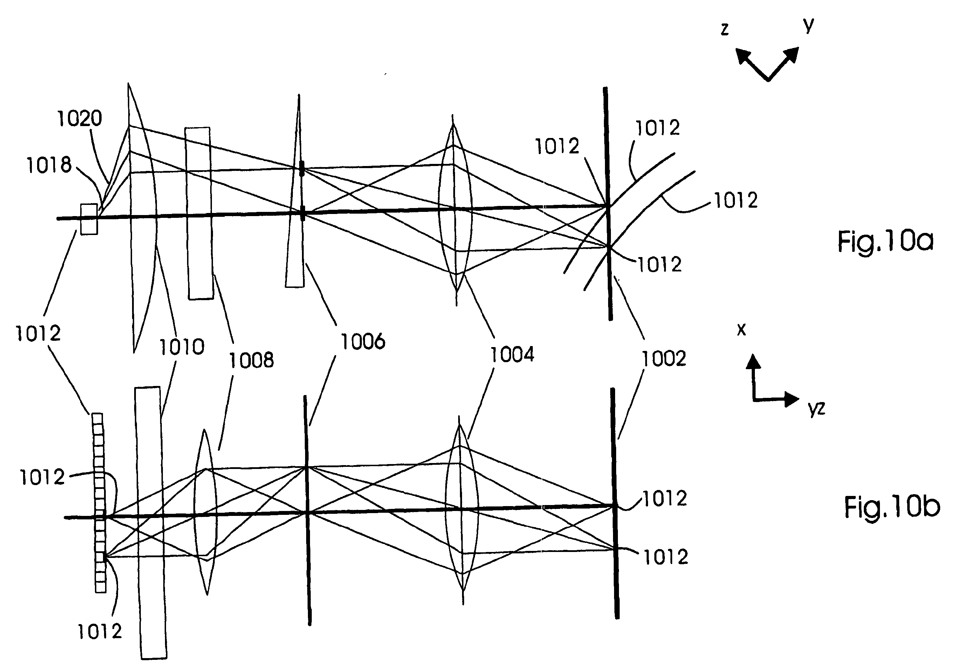

Die Figur 10 ist eine schematische Darstellung einer zweiten vorteilhaften Weiterbildung der alternativen Ausführungsform der erfindungsgemäßen Einrichtung. Im Teilbild 10a der Figur 10 ist ein Schnitt in der yz-Ebene gezeigt, während im Teilbild 10b der Figur 10 ein Schnitt in x-Richtung dargestellt ist. Die Oberfläche der Druckform schneidet in einer ersten Lage 1001 die Linienebene 1002 in einem ersten Reflexionspunkt 1014, während die Oberfläche der Druckform in einer zweiten Lage 1003 die Linienebene 1002 in einem zweiten Reflexionspunkt 1016 schneidet. Der erste Reflexionspunkt 1014 und der zweite Reflexionspunkt 1016 werden mittels einer rotationssymmetrischen Abbildungsoptik 1004 in eine Umwandlungsebene 1006 abgebildet. In dieser befindet sich ein optisches Element mit ortsabhängiger Transmission. Von dort wird mit einer wenigstens zwei Teile aufweisenden Abbildungsoptik, bestehend aus einer ersten zylindersymmetrischen Abbildungsoptik 1008 und einer zweiten zylindersymmetrischen Abbildungsoptik 1010, deren Symmetrieachsen im wesentlichen zueinander senkrecht stehen, in eine Detektionebene 1012 abgebildet. Der erste Detektionspunkt 1018, welcher dem ersten Reflexionspunkt 1014 entspricht, und der zweite Detektionspunkt 1024, welcher dem zweiten Reflexionspunkt 1016 entspricht, fallen in dieser Ebene zusammen. Im Teilbild 10b der Figur 10 ist ein Schnitt in orthogonaler, also x-Richtung gezeigt. Ein erster Reflexionspunkt 1014 und ein zweiter Reflexionspunkt 1016 werden mittels der rotationssymmetrischen Abbildungsoptik 1004 in die Umwandlungsebene 1006 abgebildet. Von dort ausgehend bewirkt die erste zylindersymmetrische Abbildungsoptik 1008 eine Abbildung des ersten Reflektionspunktes 1014 auf einen ersten Detektionspunkt 1018 und des zweiten Reflexionspunkts 1016 auf einen zweiten Detektionspunkt 1020.

Eine derartige erfindungsgemäße Einrichtung kann sowohl in einem Druckformbelichter als auch in einem Druckwerk oder einer Druckmaschine, insbesondere Direct Imaging Druckwerken oder Druckmaschinen, verwendet werden.

### Bezugszeichenliste

- *P*: Punkt
- *OA*: optische Achse
- 1: Lichtquelle
- 2: Abbildungsoptik
- 3: Laserstrahl
- 4: Objektivoptik
- 5: Druckform
- 6: Lichtteppich
- 7: Laserstrahl
- 8: Element mit ortsabhängiger Transmission
- 9: Zylinderlinse
- 10: fotosensitiver Detektor
- 11: Fotodioden
- 12: Strahlteiler
- 13: Lichtstrahl
- 14: Zylinderlinse
- 15: fotosensitiver Detektor
- 16: Fotodioden
- 21: Lichtstrahl
- 22: optische Achse
- 23: Linse
- 24: Lichtteppich
- 25: Referenzebene
- 26: Lichtstrahl
- 27: Ebene
- 28: Lichtteppich
- 29: Lichtstrahl
- 210: Ebene
- 211: Lichtteppich
- 212: Lichtstrahl
- 213: optisches Element mit ortsabhängiger Transmission
- 214: Lichtstrahl
- 215: Lichtstrahl
- 216: Lichtstrahl
- 502: Koordinatensystem
- 504: Zylinder
- 505: Rotationsachse
- 506: Beleuchtungsstrahl
- 507: zylindersymmetrische Optik
- 508: Lichtquelle
- 509: Lichtteppich
- 510: Druckform
- 512: Strahlteiler
- 511: Zwischenoptik
- 514: Umwandlungsebene
- 516: identischer Strahlengang
- 517: Abbildungsoptik
- 518: fotosensitiver Detektor
- 519: Abbildungsoptik
- 520: fotosensitiver Detektor
- 522: Bebilderungslichtquelle
- 524: Abbildungsoptik
- 601: Beleuchtungsstrahl
- 602: erste Position der Schnittlinie
- 603: Normalenrichtung
- 604: zweite Position der Schnittlinie
- 605: Fortsetzung Beleuchtungsstrahl
- 606: dritte Position der Schnittlinie
- 608: Druckform
- 610: Linienebene
- 612: reflektierter Strahl
- 701: Druckform
- 702: Lichtschnitt
- 703: Reflexionstransformation
- 704: Weginformation im reflektierten Strahl
- 705: Linienebene
- 706: Abbildungstransformation
- 707: Umwandlungsebene
- 708: Bildfleck
- 709: optisches Element mit ortsabhängiger Transmission
- 710: Intensitätstransformation
- 711: Detektionsebene
- 712: fotosensitiver Detektor
- 713: Fotodioden
- 714: Signaltransformation
- 715: Helligkeitssignal .
- 716: Signal für einzelne Punkte
- 801: erste Lage der Druckform
- 802: Linienebene
- 803: zweite Lage der Druckform
- 804: rotationssymmetrische Abbildungsoptik
- 806: Umwandlungsebene
- 808: rotationssymmetrische Abbildungsoptik
- 810: fotosensitiver Detektor
- 812: erster Reflexionspunkt
- 814: zweiter Reflexionspunkt
- 816: erster Detektionspunkt
- 818: zweiter Detektionspunkt
- 820: dritter Detektionspunkt
- 608: Druckform
- 610: Linienebene
- 612: reflektierter Strahl
- 701: Lichtschnitt
- 702: Druckform
- 703: Reflexionstransformation
- 704: Weginformation im reflektierten Strahl
- 705: Linienebene
- 706: Abbildungstransformation
- 707: Umwandlungsebene
- 708: Bildfleck
- 709: optisches Element mit ortsabhängiger Transmission
- 710: Intensitätstransformation
- 711: Detektionsebene
- 712: fotosensitiver Detektor
- 713: Fotodioden
- 714: Signaltransformation
- 715: Helligkeitssignal
- 716: Signal für einzelne Punkte
- 801: erste Lage der Druckform
- 802: Linienebene
- 803: zweite Lage der Druckform
- 804: rotationssymmetrische Abbildungsoptik
- 806: Umwandlungsebene
- 808: rotationssymmetrische Abbildungsoptik
- 810: fotosensitiver Detektor
- 812: erster Reflexionspunkt
- 814: zweiter Reflexionspunkt
- 816: erster Detektionspunkt
- 818: zweiter Detektionspunkt
- 820: dritter Detektionspunkt

## Patentansprüche

1. Einrichtung zur Bestimmung der Abweichung der Lage von *n* Punkten (*P*), wobei *n* eine natürliche Zahl größer oder gleich 2 ist, von ihren *n* disjunkten Referenzlagen, mit einer Quelle (1) von Licht, einer Abbildungsoptik (2, 4, 9), wodurch Licht bei Passage eines Teils der Abbildungsoptik (2, 4) einen linienförmigen Lichtteppich (6) bildet, der auf die Stelle aller *n* Punkte (*P*) schräg projiziert wird, so dass der Lichtteppich (6) die durch die *n* Punkte (*P*) definierte Fläche beleuchtet, wobei die Abweichung der Lage auf der Fläche jedes der *n* Punkte (*P*) von seiner Referenzlage im eindeutigen Zusammenhang zu einem anderen Lichtweg des von einem der *n* Punkte (*P*) reflektierten Lichtes als dem Lichtweg des vom besagten Punkt (*P*) in Referenzlage reflektierten Lichtes durch die Abbildungsoptik (4, 9) führt, so dass die Lageinformation der *n* Punkte (*P*) in eine Weginformation des Lichtes durch die Abbildungsoptik (4,9) umgewandelt wird, und einem fotosensitiven Detektor (10), auf den das reflektierte Licht mittels eines Elementes der Abbildungsoptik (9) fokussiert wird und der zeitlich im Wesentlichen simultan oder parallel n Signale erzeugt, wobei jedes der *n* Signale eindeutig einem der *n* Punkte (*P*) zugeordnet ist,
**dadurch gekennzeichnet,**
**dass** wenigstens ein weiteres Element (8) der Abbildungsoptik (4,9) vorgesehen ist, welches dem fokussierenden Element (9) im Lichtweg vorgeordnet ist und eine ortsabhängige Transmission derart aufweist, dass die Weginformation des Lichtes von jedem der *n* Punkte (*P*) auf einem anderen Lichtweg durch die Abbildungsoptik (4,9) in eine Intensitätsinformation in Form der eindeutig veränderten Lichtintensität des Lichtes auf dem anderen Weg umgewandelt wird.

2. Einrichtung nach Anspruch 1,
**dadurch gekennzeichnet,**
**dass** die Quelle (1) eine einzelne Strahlungsquelle ist.

3. Einrichtung nach einem der oberen Ansprüche,
**dadurch gekennzeichnet,**
**dass** die n Punkte im Wesentlichen in einer Ebene oder auf einer Geraden liegen.

4. Einrichtung nach einem der oberen Ansprüche,
**dadurch gekennzeichnet,**
**dass** die Abbildungsoptik (2, 4, 9) asphärische optische Elemente aufweist.

5. Einrichtung nach einem der oberen Ansprüche,
**dadurch gekennzeichnet,**
**dass** der fotosensitive Detektor (10) aus einer Anzahl voneinander unabhängiger fotosensitiver Elemente (19) besteht.

6. Einrichtung nach Anspruch 5,
**dadurch gekennzeichnet,**
**dass** die fotosensitiven Elemente (11) Fotodioden, Fotozellen, Fotomultiplier oder Charged Coupled Displays (CCDs) sind:

7. Einrichtung nach Anspruch 5 oder 6,
**dadurch gekennzeichnet,**
**dass** für wenigstens zwei der n voneinander unabhängigen fotosensitiven Elemente (11) genau und eindeutig wenigstens zwei der n Punkte zugeordnet ist.

8. Einrichtung nach einem der oberen Ansprüche,
**dadurch gekennzeichnet,**
**dass** die Strahlungsquelle (1) mindestens eine infrarote oder sichtbare Wellenlänge emittiert.

9. Einrichtung nach Anspruch 1,
**dadurch gekennzeichnet,**
**dass** die Abbildungsoptik einen Graukeil (8) oder eine Kante (8) aufweist.

10. Einrichtung nach einem der oberen Ansprüche,
**dadurch gekennzeichnet,**
**dass** der dem Lichtteppich (6, 509) nachgeordnete Teil der Abbildungsoptik wenigstens zwei optische Elemente (904, 908) mit zueinander im wesentlichen orthogonalen zylindersymmetrischen Symmetrieachsen aufweist.

11. Einrichtung nach einem der Ansprüche 1 bis 9,
**dadurch gekennzeichnet,**
**dass** ein Zwischenbild in einer Umwandlungsebene (1006), in der das optische Element (8) mit ortsabhängiger Transmission liegt, erzeugt wird.

12. Einrichtung nach einem der oberen Ansprüche,
**dadurch gekennzeichnet,**
**dass** die Abbildungsoptik wenigstens einen Strahlteiler (12) im Lichtweg nach der Reflexion aufweist.

13. Einrichtung nach Anspruch 12,
**dadurch gekennzeichnet,**
**dass** wenigstens ein weiterer fotosensitiver Detektor (10) mit einer Anzahl unabhängiger fotosensitiver Elemente (11), wobei jedem der voneinander unabhängigen Elemente wenigstens einen oder genau einer der n Punkte (P) zugeordnet ist.

14. Entfernungsmesser,
**dadurch gekennzeichnet,**
**dass** der Entfernungsmesser eine Einrichtung gemäß einem der oberen Ansprüche aufweist.

15. Bebilderungseinrichtung mit *n* einzeln ansteuerbaren Lasern und voneinander unabhängigen Abbildungsoptiken und einem Autofokussystem, welches eine Fokusverschiebung unabhängig für wenigstens zwei der n einzelnen ansteuerbaren Laser, mit n aus den natürlichen Zahlen, ermöglicht,
**dadurch gekennzeichnet,**
**dass** das Autofokussystem in Funktion des Messergebnisses eines Entfernungsmessers gemäß Anspruch 14 geregelt ist.

16. Druckformbelichter,
**dadurch gekennzeichnet,**
**dass** der Druckformbelichter wenigstens eine Bebilderungseinrichtung gemäß Anspruch 15 aufweist.

17. Druckwerk,
**dadurch gekennzeichnet,**
**dass** das Druckwerk eine Bebilderungseinrichtung gemäß Anspruch 15 aufweist.

18. Druckmaschine,
**dadurch gekennzeichnet,**
**dass** die Druckmaschine wenigstens ein Druckwerk gemäß Anspruch 17 aufweist.

19. Verfahren zur Bestimmung der Abweichung der Lage von *n* Punkten (P) von ihren *n*
disjunkten Referenzlagen, wobei *n* eine natürliche Zahl größer oder gleich 2 ist, mit den folgenden Schritten:
- Projektion von Licht schräg auf jeden einzelnen der *n* Punkte (*P*) in einen Lichtteppich (6), der die durch die *n* Punkte (*P*) definierte Fläche linienförmig beleuchtet,
- Umwandlung der Lageinformation der Punkte (*P*) in Weginformation der Lichtstrahlung, wobei die Abweichung der Lage auf der Fläche jedes der *n* Punkte (*P*) von seiner Referenzlage im eindeutigen Zusammenhang zu einem anderen Lichtweg des von einem der *n* Punkte (*P*) reflektierten Lichtes als dem Lichtweg des vom besagten Punkt (*P*) in Referenzlage reflektierten Lichtes durch eine Abbildungsoptik (4, 9) führt,
- Diskriminierende Detektion des reflektierten Lichtes von wenigstens zwei der *n* Punkte (*P*) auf einem fotosensitiven Detektor (10), auf den das reflektierte Licht mittels eines Elementes der Abbildungsoptik (9) fokussiert wird,
wobei die Verfahrensschritte zeitlich simultan oder parallel für alle *n* Punkte (*P*) vorgenommen werden,
**dadurch gekennzeichnet,**
**dass** zur Umwandlung der Lageinformation in Intensitätsinformation mittels eines dem fokussierenden Element (9) vorgeordneten Elementes (8) mit ortsabhängiger Transmission die Weginformation des Lichtes von jedem der *n* Punkte (*P*) auf einem anderen Lichtweg in eine Intensitätsinformation in Form der eindeutig veränderten Lichtintensität des Lichtes auf dem anderen Weg umgewandelt wird.

20. Verfahren zur Bestimmung der Abweichung der Lage von n Punkten (8) von ihren Referenzlagen gemäß Anspruch 19 mit dem zusätzlichen Schritt:
- Messung der momentanen Intensität der reflektierten elektromagnetischen Strahlung für mindestens einen der *n* Punkte (8)
**dadurch gekennzeichnet,**
**dass** ein Vergleich der am korrespondierenden fotosensitiven Element des Detektors gemessenen Intensität des reflektierten Lichtes zur momentanen Intensität der reflektierten elektromagnetischen Strahlung durchgeführt wird.

## Claims

1. Device for determining the positional deviation of n points (P), n being a natural number equal to or greater than 2, from their n disjunct reference positions, including a source (1) of light, an imaging optics (2, 4, 9) through which light passing a part of the imaging optics (2, 4) forms a line-shaped carpet of light (6) that is obliquely projected onto the location of all n points (P) so that the carpet of light (6) illuminates the surface defined by the n points (P), the positional deviation of each of the n points (P) on the surface from the reference position leading, in an unique relationship, to a different light path of the light reflected by one of the n points (P) than the light path of the light reflected form the said point (P) in the reference position through the imaging optics (4, 9), so that the positional information of the n points (P) is transformed into path information of the light through the imaging optics (4, 9), and the device including a photosensitive detector (10) onto which the reflected light is focused by means of an element of the imaging optics (9) and which, substantially simultaneously or concurrent in time, generates n signals, each of the n signals being uniquely allocated to one of the n points (P),
**characterized in**
**that** at least one further element (8) of the imaging optics (4, 9) is provided, which is disposed before the focusing element (9) in the path of the light and has a position-dependent transmission such that the path information of the light of each of the n points (P) on a different light path through the imaging optics (4, 9) is converted into intensity information in the form of the uniquely modified light intensity of the light on the different path.

2. Device according to claim 1,
**characterized in**
**that** the source (1) is an individual source of radiation.

3. Device according to one of the preceding claims,
**characterized in**
**that** the n points are substantially located in a plane or on a straight line.

4. Device according to one of the preceding claims,
**characterized in**
**that** the imaging optics (2, 4, 9) includes aspherical optical elements.

5. Device according to one of the preceding claims,
**characterized in**
**that** the photosensitive detector (10) consists of a number of photosensitive elements (19) that are independent of each other.

6. Device according to claim 5,
**characterized in**
**that** the photosensitive elements (11) are photodiodes, photocells, photomultipliers, or charged coupled displays (CCDs).

7. Device according to claim 5 or 6,
**characterized in**
**that** for at least two of the n photosensitive elements (11) that are independent of each other at least two of the n points are precisely and uniquely allocated.

8. Device according to one of the preceding claims,
**characterized in**
**that** the source (1) of radiation emits at least an infrared or visible wavelength.

9. Device according to claim 1,
**characterized in**
**that** the imaging optics includes an optical wedge (8) or an edge (8).

10. Device according to one of the preceding claims,
**characterized in**
**that that** part of the imaging optics that is disposed after the carpet of light (6, 509) includes at least two optical elements (904, 908) with cylindrically symmetric axes of symmetry that are substantially normal to each other.

11. Device according to one of claims 1 to 9,
**characterized in**
**that** an intermediate image is generated in a conversion plane (1006), in which the optical element (8) with position-dependent transmission is located.

12. Device according to one of the preceding claims,
**characterized in**
**that** the imaging optics includes at least one beam splitter (12) in the light path downstream of the reflection.

13. Device according to claim 12,
**characterized in**
**that** at least one further photosensitive detector (10) with a number of independent photosensitive elements (11) is provided, at least one or precisely one of the n points (P) being allocated to each of the elements that are independent of each other.

14. Distance measuring device,
**characterized in**
**that** the distance measuring device includes a device according to one of the preceding claims.

15. Imaging device with n lasers that are individually addressable and imaging optics that are independent of each other and an autofocussing system that permits an independent focus displacement for at least two of the n individually addressable lasers, n being a natural number,
**characterized in**
**that** the autofocussing system is controlled as a function of the measured result of a distance measurement device according to claim 14.

16. Printing forme exposure device,
**characterized in**
**that** the printing forme exposure device includes at least one imaging device according to claim 15.

17. Printing unit,
**characterized in**
**that** the printing unit includes an imaging device according to claim 15.

18. Printing press,
**characterized in**
**that** the printing press includes at least one printing unit according to claim 17.

19. Method of determining the positional deviation of n points (P) from their n disjunct reference positions, n being a natural number equal to or greater than two, including the following steps:
- projecting light obliquely onto each individual one of the n points (P) in a carpet of light (6) that illuminates the surface defined by the n points (P) in a line-shaped manner,
- converting the positional information of the points (P) into path information of the light radiation, the positional deviation on the surface of each of the n points (P) from its reference position leads, in a unique relationship, to a different light path of the light reflected by one of the n points (P) through an imaging optics (4, 9) than the light path of the light reflected by the said point (P) in the reference position,
- discriminatingly detecting the reflected light of at least two of the n points (P) on a photosensitive detector (10) onto which the reflected light is focused by means of an element of the imaging optics (9),
wherein the method steps are performed simultaneously or parallel in time for all n points (P),
**characterized in**
**that** to convert the positional information into intensity information by means of an element (8) that has position-dependent transmission and is disposed before the focusing element (9), the path information of the light of each of the n points (P) on a different light path is converted into intensity information in the form of the uniquely modified light intensity of the light on the different path.

20. Method of determining the positional deviation of n points (8) from their reference positions according to claim 19 including the additional step of measuring the momentary intensity of the reflected electromagnetic radiation for at least one of the n points (8),
**characterized in**
**that** a comparison of the intensity of the reflected light measured at the corresponding photosensitive element of the detector and the momentary intensity of the reflected electromagnetic radiation is carried out.

## Revendications

1. Système pour la détermination de l'écart de position de n points (P), *n* étant un entier naturel supérieur ou égal à 2, de leurs n positions de référence disjointes, comprenant une source (1) de lumière, et une optique de reproduction (2, 4, 9), par laquelle de la lumière forme, lors du passage d'une partie de l'optique de reproduction (2, 4), un tapis de lumière (6) en forme de ligne, qui est projeté de manière oblique sur le lieu de tous les *n* points (P), de sorte que le tapis de lumière (6) éclaire la surface définie par les n points (P), l'écart de position sur la surface de chacun des *n* points (P) de sa position de référence conduisant, selon une corrélation non équivoque, à un autre parcours de lumière de la lumière réfléchie par l'un des *n* points (P) que le parcours de lumière de la lumière réfléchie par ledit point (P) en position de référence à travers l'optique de reproduction (4, 9), de sorte que l'information de position des n points (P) est convertie en une information de parcours de la lumière à travers l'optique de reproduction (4, 9), le système comprenant également un détecteur photosensible (10), sur lequel est focalisée la lumière réfléchie, au moyen d'un élément de l'optique de reproduction (9), et qui engendre, dans le temps sensiblement simultanément ou en parallèle, n signaux, chacun des *n* signaux étant associé sans équivoque à l'un des *n* points (P), **caractérisé en ce qu'**il est prévu au moins un autre élément (8) de l'optique de reproduction (4, 9), qui, dans le parcours de la lumière, est placé en amont de l'élément (9) de focalisation, et présente une transmission fonction de la localisation de façon telle, que l'information de parcours de la lumière de chacun des n points (P) sur un autre parcours de lumière à travers l'optique de reproduction (4, 9) soit convertie en une information d'intensité sous la forme de l'intensité lumineuse modifiée sans équivoque de la lumière sur l'autre parcours.

2. Système selon la revendication 1, **caractérisé en ce que** la source (1) est une source de rayonnement individuelle.

3. Système selon l'une des revendications précédentes, **caractérisé en ce que** les n points se situent sensiblement dans un plan ou sur une droite.

4. Système selon l'une des revendications précédentes, **caractérisé en ce que** l'optique de reproduction (2, 4, 9) comprend des éléments optiques non sphériques.

5. Système selon l'une des revendications précédentes, **caractérisé en ce que** le détecteur photosensible (10) est constitué d'un certain nombre d'éléments photosensibles (11) indépendants les uns des autres.

6. Système selon la revendication 5, **caractérisé en ce que** les éléments photosensibles (11) sont des photodiodes, des cellules photoélectriques, des photomultiplicateurs ou des éléments photosensibles à transfert ou couplage de charge (CCD).

7. Système selon la revendication 5 ou 6, **caractérisé en ce qu'**à au moins deux des *n* éléments photosensibles (11) indépendants les uns des autres, sont associés exactement et sans équivoque au moins deux des n points.

8. Système selon l'une des revendications précédentes, **caractérisé en ce que** la source de rayonnement (1) émet au moins une longueur d'onde infrarouge ou visible.

9. Système selon la revendication 1, **caractérisé en ce que** l'optique de reproduction comprend au moins un coin neutre (8) ou une arête (8).

10. Système selon l'une des revendications précédentes, **caractérisé en ce que** la partie de l'optique de reproduction succédant au tapis de lumière (6, 509) comprend au moins deux éléments optiques (904, 908) avec des axes de symétrie cylindrosymétriques sensiblement orthogonaux.

11. Système selon l'une des revendications 1 à 9, **caractérisé en ce qu'**une image intermédiaire est engendrée dans un plan de conversion (1006) dans lequel se situe l'élément optique (8) à transmission fonction de la localisation.

12. Système selon l'une des revendications précédentes, **caractérisé en ce que** l'optique de reproduction présente au moins un séparateur de rayonnement ou lame séparatrice (12) dans le parcours de lumière après la réflexion.

13. Système selon la revendication 12,
**caractérisé en ce qu'**il est prévu au moins un autre détecteur photosensible (10) avec un certain nombre d'éléments photosensibles (11) indépendants, à chacun des éléments indépendants les uns des autres étant associé au moins un ou exactement un des *n* points (P).

14. Appareil de mesure de distance d'éloignement, **caractérisé en ce que** l'appareil de mesure de distance d'éloignement comporte un système selon l'une des revendications précédentes.

15. Dispositif de formation d'image comprenant n lasers pouvant être commandés individuellement et optiques de reproduction indépendantes les unes des autres, et comprenant un système autofocus permettant un décalage de focalisation indépendamment pour au moins deux des *n* lasers pouvant être commandés individuellement, *n* appartenant aux entiers naturels, **caractérisé en ce que** le système autofocus est réglé en fonction du résultat de mesure d'un appareil de mesure de distance d'éloignement selon la revendication 14.

16. Appareil d'exposition ou d'irradiation de formes d'impression, **caractérisé en ce que** l'appareil d'exposition ou d'irradiation de formes d'impression comprend au moins un dispositif de formation d'image selon la revendication 15.

17. Groupe d'impression, **caractérisé en ce que** le groupe d'impression comprend un dispositif de formation d'image selon la revendication 15.

18. Machine à imprimer, **caractérisée en ce que** la machine à imprimer comprend au moins un groupe d'impression selon la revendication 17.

19. Procédé pour déterminer l'écart de position de n points (P) de leurs *n* positions de référence disjointes, *n* étant un entier naturel supérieur ou égal à 2, comprenant les étapes suivantes :
- projection oblique de lumière sur chacun des *n* points (P) individuels dans un tapis de lumière (6), qui éclaire en forme de ligne la surface définie par les *n* points (P),
- conversion de l'information de position des points (P) en information de parcours du rayonnement lumineux, l'écart de la position sur la surface de chacun des *n* points (P) de sa position de référence conduisant, selon une corrélation non équivoque, à un autre parcours de lumière de la lumière réfléchie par l'un des *n* points (P) que le parcours de lumière de la lumière réfléchie par ledit point (P) en position de référence à travers une optique de reproduction (4, 9),
- détection discriminatoire de la lumière réfléchie d'au moins deux des *n* points (P) sur un détecteur photosensible (10) sur lequel est focalisée la lumière réfléchie au moyen d'un élément de l'optique de reproduction (4, 9),
les étapes de procédé se déroulant dans le temps sensiblement simultanément ou en parallèle pour tous les n points (P),
**caractérisé en ce que** pour la conversion de l'information de position en information d'intensité au moyen d'un élément (8) à transmission fonction de la localisation placé en amont de l'élément (9) de focalisation, l'information de parcours de la lumière de chacun des *n* points (P) sur un autre parcours de lumière, est convertie en une information d'intensité sous la forme de l'intensité lumineuse modifiée sans équivoque de la lumière sur l'autre parcours.

20. Procédé pour déterminer l'écart de position de *n* points (P) de leurs positions de référence, selon la revendication 19, présentant l'étape supplémentaire :
- mesure de l'intensité instantanée du rayonnement électromagnétique réfléchi pour l'un au moins des *n* points (P),
**caractérisé en ce que** l'on effectue une comparaison de l'intensité de la lumière réfléchie, mesurée au niveau de l'élément photosensible correspondant du détecteur, avec l'intensité instantanée du rayonnement électromagnétique réfléchi.
